# EUROPÄISCHE PATENTSCHRIFT

(11) **EP 1 782 438 B1**
(45) Veröffentlichungstag und Bekanntmachung des Hinweises auf die Patenterteilung: **18.05.2011**
(21) Anmeldenummer: 05782886.5
(22) Anmeldetag: 25.08.2005
(51) Int. Cl.: H01F 1/44

(54) **MAGNETORHEOLOGISCHE ELASTOMERE UND DEREN VERWENDUNG**
MAGNETORHEOLOGICAL ELASTOMERS AND USE THEREOF
ELASTOMERES MAGNETORHEOLOGIQUES ET LEUR UTILISATION

(30) Priorität: 27.08.2004 DE 102004041649
(43) Veröffentlichungstag der Anmeldung: 09.05.2007
(73) Patentinhaber: Fraunhofer-Gesellschaft zur Förderung der angewandten Forschung e.V., 80686 München (DE)
(72) Erfinder: BÖSE, Holger, 97080 Würzburg (DE); RÖDER, René, 99819 Grossenlupnitz (DE)
(74) Vertreter: Pfenning, Meinig & Partner GbR
(86) Internationale Anmeldenummer: PCT/EP2005/009195
(87) Internationale Veröffentlichungsnummer: WO 2006/024457

(56) Entgegenhaltungen:
- EP-A- 0 784 163
- WO-A-01/61713
- US-A- 6 027 664
- JOLLY M R ET AL: "A model of the behavior of magnetorheological materials" SMART MATERIALS AND STRUCTURES, IOP PUBLISHING LTD., BRISTOL, GB, Bd. 5, 1996, Seiten 607-614, XP002030580 ISSN: 0964-1726
- JOLLY MARK R ET AL: "Magnetoviscoelastic response of elastomer composites consisting of ferrous particles embedded in a polymer matrix" J INTELL MATER SYST STRUCT; JOURNAL OF INTELLIGENT MATERIAL SYSTEMS AND STRUCTURES NOV 1996, Bd. 7, Nr. 6, November 1996 (1996-11), Seiten 613-622, XP009057466 NY, US
- DAVIS L C: "Model of magnetorheological elastomers" JOURNAL OF APPLIED PHYSICS, AMERICAN INSTITUTE OF PHYSICS. NEW YORK, US, Bd. 85, Nr. 6, 15. März 1999 (1999-03-15), Seiten 3348-3351, XP012046944 ISSN: 0021-8979
- GINDER J M ; NICHOLS M E ; ELIE L D ; TARDIFF J L: "Magnetorheological elastomers: Properties and applications" PROC SPIE INT SOC OPT ENG; PROCEEDINGS OF SPIE - THE INTERNATIONAL SOCIETY FOR OPTICAL ENGINEERING 1999 SOCIETY OF PHOTO-OPTICAL INSTRUMENTATION ENGINEERS, BELLINGHAM, WA, USA, Bd. 3675, März 1999 (1999-03), Seiten 131-138, XP002355156
- SHEN Y. ET AL.: "Experimental research and modeling of magnetorheological elastomers" Journal of Intelligent Material Systems and Structures Sage Publications USA, Bd. 16, Nr. 2, Januar 2004 (2004-01), Seiten 27-35, XP002355157 ISSN: 1045-389X

## Beschreibung

Die Erfindung betrifft magnetorheologische Elastomere aus mindestens einem nicht-magnetisierbaren elastomeren Trägermedium und darin enthaltenen magnetisierbaren Partikeln sowie deren Verwendung. Bei derartigen MRE können die mechanischen Eigenschaften wie der Schubmodul durch ein angelegtes Magnetfeld reversibel verändert werden.

Magnetisch steuerbare Elastomerkomposite aus einer Elastomermatrix und magnetisch polarisierbaren Partikeln, sog. magnetorheologische Elastomere (MRE), sind bereits bekannt. Die EP 41 88 07 B1 beschreibt z.B. die Herstellung eines hochgesättigten Nitrilkautschuks ohne Bindemittel und Reaktionsbeschleuniger, indem Strontium und/oder Bariumferrite eingelagert sind. Nach dem vorstehend erwähnten europäischen Patent wird dabei nach dem Formen das Material durch Einwirken eines Hochspannungselektronenstrahls ausgehärtet.

Die WO 230 25 056 A1 beschreibt eine Harzzusammensetzung bestehend aus 50 bis 95 Masse-% eines Elastomers sowie 50 bis 5 Masse-% eines Ethylencopolymers mit einer hohen Festigkeit und guten elastischen Eigenschaften. In diesem Harz sind magnetische Pulver enthalten.

Nachteilig bei den bisher im Stand der Technik bekannten MRE's ist es jedoch, dass die mechanischen Eigenschaften dieser vorbekannten MRE's nur in Grenzen durch das angelegte Magnetfeld einstellbar waren. Dadurch sind die Einsatzmöglichkeiten dieser MRE's begrenzt.

Ausgehend hiervon ist deshalb die Aufgabe der vorliegenden Erfindung, neue MRE's anzugeben, die eine besonders hohe Variabilität durch das angelegte Magnetfeld in Bezug auf die mechanischen Eigenschaften aufweisen. Eine weitere Aufgabe der Erfindung ist es, entsprechende Verwendungsmöglichkeiten für derartige magnetorheologische Elastomere aufzuzeigen.

Die Aufgabe wird durch die kennzeichnenden Merkmale des Patentanspruchs 1 gelöst. Die Patentansprüche 15 und 16 geben die erfindungsgemäßen Verwendungen an. Die Unteransprüche zeigen vorteilhafte Weiterbildungen auf.

Gemäß der vorliegenden Erfindung wird somit vorgeschlagen, dass spezielle elastomere Trägermedien eingesetzt werden und zwar solche, die einen Schubmodul < 250 kPa gemessen bei einer Frequenz von 10 Hz und einer Deformation von 1 % und bei 25°C aufweisen. Damit lassen sich Steigerungen im Schubmodul um den Faktor 100 oder mehr erreichen. Die ausgezeichneten Eigenschaften der erfindungsgemäßen magnetorheologischen Elastomere werden darauf zurückgeführt, dass besonders "weiche elastomere Trägermedien" eingesetzt werden. Die Elastomere der Erfindung sind Polymere mit gummielastischem Verhalten, die bei Gebrauchstemperatur aufgrund der Vernetzung der Polymerketten nicht viskos fließen können (siehe auch Römpp Chemie Lexikon, 1. Auflage, Seite 1105 ff.). Die elastomeren Trägermedien nach der Erfindung besitzen neben dem vorstehend beschriebenen Schubmodul eine Shorehärte A von unter 20, bevorzugt unter 10 und ein E-Modul < 1500 kPa, bevorzugt < 750 kPa aufweisen. Das Schubmodul der Elastomere nach der Erfindung wird oszillatorisch bei einer konstanten Frequenz und Scherdeformation bestimmt. Es handelt sich somit um eine Materialeigenschaft des Elastomers.

Es wird vermutet, dass die hohe Steigung des Schubmoduls im Magnetfeld auf die relativ hohe Beweglichkeit der magnetischen Partikeln im schwach vernetzten Elastomer zurückzuführen ist. Damit wird erreicht, dass die magnetischen Anziehungskräfte zwischen den Teilchen, die durch das Elastomer erzeugten Haltekräfte überwinden, sodass sich die Partikel im Magnetfeld zu mechanisch besonders festen Strukturen zusammenlegen können. Eine Besonderheit der erfindungsgemäßen MRE's ist darin zu sehen, dass bei einer Verringerung des Vernetzungsgrades im Elastomer zwar der Grundschubmodul erwartungsgemäß abnimmt, der Schubmodul in einem starken Magnetfeld teilweise aber überraschenderweise zunimmt.

Bei den erfindungsgemäßen MRE's ist es bevorzugt, wenn das Elastomer aus Silicon oder Polyurethan ausgewählt ist, wobei, wie eingangs bereits ausgeführt, das entsprechende Schubmodul vorhanden sein muss.

Elastomere, die für die erfindungsgemäßen MRE's eingesetzt werden können, sind käuflich erhältlich, z.B. bei Bayer AG oder Wacker-Chemie GmbH. Die Elastomere können dabei so hergestellt werden, dass ausgehend von den flüssigen Edukten eine thermische oder photochemische Vernetzung durchgeführt wird, wobei die Edukte zur Herstellung der Elastomere so ausgelegt sind, dass ein entsprechender Vernetzungsgrad und ein entsprechendes Schubmodul, wie es gemäß Patentanspruch 1 gefordert wird, eingestellt wird.

Silicon-Elastomere werden beispielsweise durch Polyaddition von langkettigen, vinylgruppenhaltigen Dimethylsiloxan-Polymeren mit kurzkettigen, silanhaltigen Dimethylsiloxan-Polymeren hergestellt. Je nach Lage der Silan-Gruppen werden die Polymere zu Ketten verlängert oder zu einem dreidimensionalen Netzwerk vernetzt. Durch Variation des Silan-Anteils kann das bei der Vernetzung entstehende Silicon-Elastomer in seinem Vernetzungsgrad und somit in seinen Modulwerten eingestellt werden.

Polyurethan-Elastomere werden beispielsweise durch Polyaddition von Hydroxyl- mit Cyanat-Gruppen synthetisiert. Die Funktionalität der Cyanat- oder Hydroxyl-Reagenzien bestimmen hierbei den Vernetzungsgrad: Bifunktionelle Edukte verlängern die Molekülketten, trifunktionelle Edukte bilden dreidimensionale Vernetzungsstellen.

Bei den magnetisierbaren Partikeln können alle an und für sich aus dem Stand der Technik für MRE's bzw. für die magnetorheologischen Flüssigkeiten bekannten Partike aus weichmagnetischen Materialien eingesetzt werden. Beispiele hierfür sind: Weichmagnetische metallische Werkstoffe wie Eisen, Kobalt, Nickel (auch in nichtreiner Form) und Legierungen daraus wie Eisen-Kobalt, Eisen-Nickel, magnetischer Stahl, Eisen-Silizium und/oder deren Mischungen. Weiterhin können magnetisierbare Partikel aus weichmagnetischen oxidkeramischen Werkstoffen eingesetzt werden, wie kubische Ferrite, Perowskite und Granaten der allgemeinen Formel: MO.Fe₂O₃ mit einem oder mehreren Metallen aus der Gruppe Mn, Fe, Co, Ni, Cu, Zn, Ti, Cd oder Magnesium und/oder deren Mischungen. Auch können Mischferrite wie MnZn-, NiZn-, NiCo-, NiCuCo-, NiMg-, CuMg-Ferrite und/oder deren Mischungen eingesetzt werden, wie auch Partikel aus Eisencarbid, Eisennitrid, Legierungen von Vanadium, Wolfram, Kupfer und Mangan und/oder deren Mischungen. Die bevorzugte mittlere Partikelgröße liegt dabei im Bereich von 5 nm bis 10 mm, bevorzugt zwischen 10 nm und 1 mm. Die Partikelgrößenverteilung kann auch bimodal sein.

Bei den magnetorheologischen Elastomeren nach der Erfindung, können die magnetisierbaren Partikel isotrop oder anisotrop in der Elastomermatrix verteilt sein.

Eine anisotrope Anordnung wird dadurch erreicht, dass den magnetisierbaren Teilchen bereits vor und/oder während der Vernetzung durch Anlegen eines Magnetfeldes eine kettenförmige Struktur entlang der Feldlinien eingeprägt wird. Durch die Stärke des vor bzw. während der Vernetzung herrschender Magnetfeldes lassen sich Feinheiten der eingeprägten Struktur vorgeben.

Eine gleichmäßige Verteilung der Teilchen in der Elastomermatrix wird ohne Anlegen eines Magnetfeldes durch sorgfältiges Homogenisieren erreicht.

Die Möglichkeit der anisotropen bzw. isotropen Anordnung der Teilchen in der Elastomermatrix hat bei den erfindungsgemäßen MRE's eine hohe Bedeutung. Damit können die mechanischen Grundeigenschaften, aber auch die Veränderungen der mechanischen Eigenschaften beim Anlegen eines Magnetfeldes zusätzlich eingestellt werden.

Die erfindungsgemäßen magnetorheologischen Elastomere können selbstverständlich auch im Stand der Technik schon bekannte Additive enthalten, wie Dispergiermittel, Antioxidantien, Entschäumer, Weichmacher und/oder Antiverschleißmittel.

Eine bevorzugte Zusammensetzung der erfindungsgemäßen MRE's ist wie folgt:
- der Anteil der magnetisierbaren Partikel beträgt zwischen 5 und 70 Vol.-%, bevorzugt zwischen 10 und 60 Vol.-%.
- der Anteil des elastomeren Trägermediums beträgt zwischen 20 und 95 Vol.-%, bevorzugt zwischen 30 und 90 Vol.-%.
- der Anteil der Additive beträgt bis zu 20 Masse-%, bevorzugt zwischen 0,01 und 15 Masse-%, bezogen auf die magnetisierbaren Feststoffe.

Die Erfindung betrifft weiterhin die Verwendung der magnetorheologischen Materialien.

Es wurde festgestellt, dass bei den erfindungsgemäßen MRE's sowohl der Speichermodul (beschreibt das elastische Verhalten bzw. Energiespeicherung) als auch der Verlustmodul (beschreibt das viskose Verhalten bzw. Energiedissipation) durch das Magnetfeld beeinflusst werden. Gleiches gilt auch für den Verlustfaktor als Verhältnis von Verlust- und Speichermodul. Damit entstehen technisch bedeutende Möglichkeiten der elektrisch gesteuerten Schwingungsdämpfung bzw. Schwingungsisolation.

Eine spezielle Ausführungsform der Nutzung von derartigen MRE's besteht im Aufbau eines Magnetkreises unter Einschluss eines Elektromagneten und eines Permanentmagneten. Durch die Auswahl eines Permanentmagneten kann eine erhöhte Grundsteifigkeit des Elastomerkomposits eingestellt werden. Der Elektromagnet kann je nach Richtung des fließenden Stromes das Magnetfeld stärken oder schwächen und damit die Steifigkeit des Elastomerkomposits (E-Modul bzw. Schubmodul) entweder erhöhen oder verringern. Damit kann beispielsweise der Arbeitspunkt in einem schwingungsdämpfenden System festgelegt werden. Die erfindungsgemäßen MRE's können für eine Reihe von Anwendungen wie z.B. für die Schwingungsdämpfung, Schwingungsisolation, Aktoren, Sicherheitsschalter, haptische Systeme und künstliche Muskeln eingesetzt werden.

Eine weitere interessante Eigenschaft der Elastomerkomposite besteht im Auftreten eines Formgedächtniseffektes. Im Magnetfeld und damit im versteiften Zustand des Komposits kann ein aus dem Kompositmaterial abgeformter Gegenstand durch Einwirkung von äußeren Kräften verformt werden. Die neue Form bleibt anschließend erhalten, solange das Magnetfeld wirkt. Nach Abschalten des Magnetfelds geht der Gegenstand in seine ursprüngliche Form zurück. Dieser Effekt lässt sich darauf zurückführen, dass im Magnetfeld, die magnetischen Kräfte zwischen den Teilchen dominieren, während das Verhalten ohne Magnetfeld durch die elastischen Kräfte des Elastomers bestimmt wird. Eine Vorraussetzung hierfür besteht darin, dass die elastischen Kräfte nicht zu stark sind. Eine weiche Elastomermatrix ist daher besonders vorteilhaft, das beschriebene Verhalten kann z.B. für Sicherheitssysteme oder künstliche Muskeln genutzt werden.

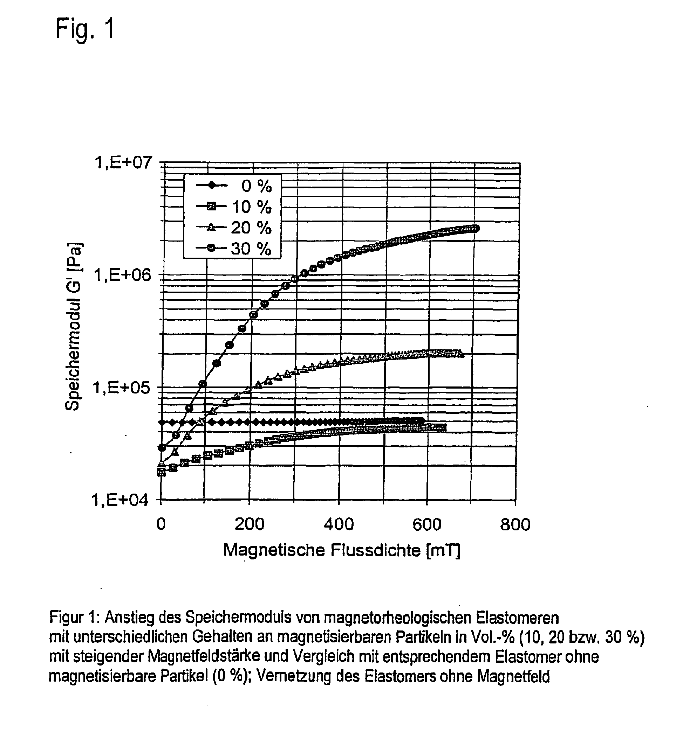

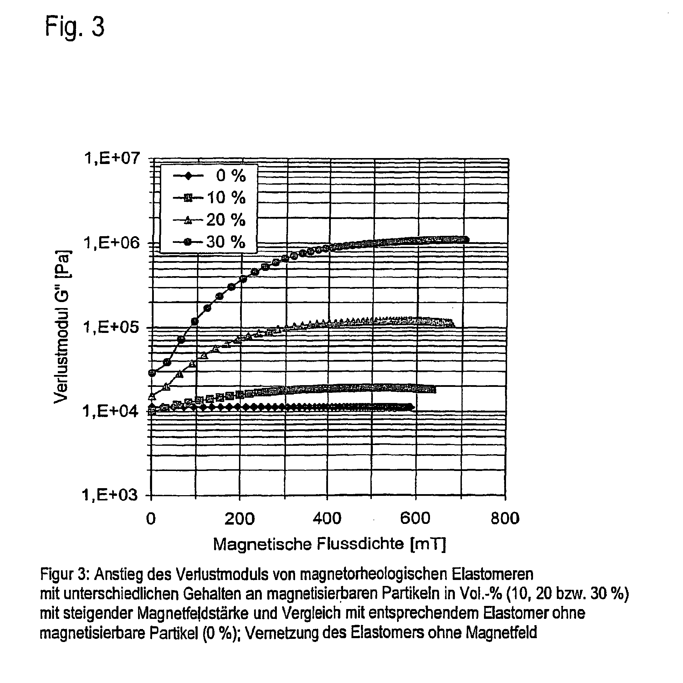

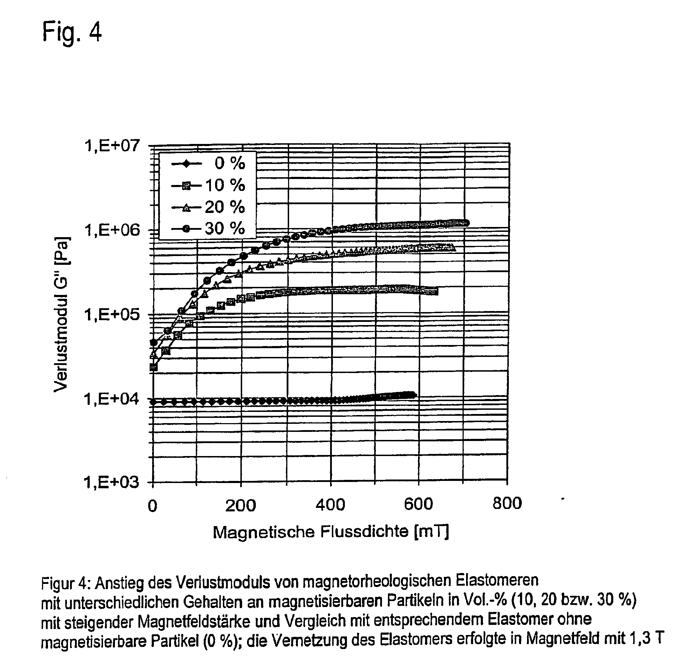

Die Erfindung wird nachfolgend anhand von Ausführungsbeispielen und den Figuren 1 bis 7 erläutert:

### Ausführungsbeispiel 1:

### Siliconelastomer mit 10 Vol.-% Eisenpartikeln

45,8 g Siliconpolymer PTS-P 7000N (α,ω-Divinylpolydimethylsiloxan, Viskosität 7000 mPas, Dichte 0,975 g/cm3 bei 23°C, Wacker-Chemie GmbH) werden in einem Aluminiumbehälter von 250 ml Inhalt auf 0,001 g Einwaagegenauigkeit eingewogen. Hierzu werden 0,5 g Inhibitor PT 67 (Dichte 0,97 g/cm³ bei 23°C, Wacker-Chemie GmbH) hinzugefügt und unter stetigem Rühren mittels eines Glasstabes (Durchmesser 10 mm) homogenisiert. Anschließend werden 0,5 g Vernetzer PTS-X 58 (Dichte 0,98 g/cm³ bei 23°C, Wacker-Chemie GmbH) sorgfältig eingerührt, bis alle Komponenten gleichmäßig verteilt sind. Danach werden 41,69 g Eisenpulver (Höganäs ASC 300, mittlere Partikelgröße 41 µm) langsam eindispergiert. Unter stetigem Rühren werden nun 0,1 g Katalysator EP (1,1,3,3-Tetramethyl-1,3-Divinylsiloxan-Platinkomplex, Dichte 0,96 g/cm³ bei 23 °C, Wacker-Chemie GmbH) hinzugegeben. Nach sorgfältigem Homogenisieren wird der Aluminiumbehälter in einen ausreichend großen Exsikkator gestellt und 5 Minuten evakuiert. Anschließend wird das Gemisch langsam in Proben formen aus Polytetrafluorethylen mit 20 mm Durchmesser und 1 mm Höhe gegossen und 2 Stunden bei 120°C getempert.

### Ausführungsbeispiel 2:

### Siliconelastomer mit 20 Vol.-% Eisenpartikeln

Die Herstellung erfolgt analog zu Ausführungsbeispiel 1, wobei die Menge des Eisenpulvers auf 93,8 g erhöht wird.

### Ausführungsbeispiel 3:

### Siliconelastomer mit 23Vol.-% Eisenpartikeln

Die Herstellung erfolgt analog zu Ausführungsbeispiel 1, wobei die Menge des Eisenpulvers auf 160,8 g erhöht wird.

### Ausführungsbeispiel 4:

### Referenzprobe Siliconelastomer ohne Eisenpartikel

Die Herstellung erfolgt analog zu Ausführungsbeispiel 1, wobei die Zugabe des Eisenpulvers unterbleibt.

### Ausführungsbeispiel 5:

### Siliconelastomer mit 10 Vol.-% Eisenpartikeln und Vernetzung im Magnetfeld

Die Herstellung erfolgt analog zu Ausführungsbeispiel 1, wobei die Vernetzung des Silicons in einem Magnetfeld der Stärke 1,28 T erfolgt.

### Ausführungsbeispiel 6:

### Siliconelastomer mit 20 Vol.-% Eisenpartikeln und Vernetzung im Magnetfeld

Die Herstellung erfolgt analog zu Ausführungsbeispiel 2, wobei die Vernetzung des Silicons in einem Magnetfeld der Stärke 1,28 T erfolgt.

### Ausführungsbeispiel 7:

### Siliconelastomer mit 30 Vol.-% Eisenpartikeln und Vernetzung im Magnetfeld

Die Herstellung erfolgt analog zu Ausführungsbeispiel 3, wobei die Vernetzung des Silicons in einem Magnetfeld der Stärke 1,28 T erfolgt.

### Ausführungsbeispiel 8:

### Referenzprobe Siliconelastomer ohne Eisenpartikel und Vernetzung im Magnetfeld

Die Herstellung erfolgt analog zu Ausführungsbeispiel 4, wobei die Vernetzung des Silicons in einem Magnetfeld der Stärke 1,28 T erfolgt.

Durchführung der Messungen an den magnetorheologischen Elastomeren

Die mechanischen Eigenschaften der vernetzten magnetorheologischen Elastomerproben würden in einem Rotationsrheometer MCR 300 der Firma Paar-Physica in einem Magnetfeld variabler Stärke untersucht. Dabei befindet sich die scheibenförmige Probe mit 20 mm Durchmesser zwischen zwei parallelen, horizontal angeordneten Platten, von denen die obere Platte eine vorgegebene Drehschwingung ausübt und damit die Probe oszillatorisch einer Scherdeformation unterzieht. Das Magnetfeld durchdringt die Probe vertikal, d. h. senkrecht zur Plattenebene. Die Amplitude der Scherdeformation wurde mit 0,01 (entspricht 1 %) konstant gehalten. Die Frequenz der Schwingung betrug 10 Hz, die Temperatur war 25°C. Während der Messung wurde die Stromstärke in der magnetfelderregenden Spule stufenweise gesteigert und damit die Magnetfeldstärke erhöht.

Bei der Messung werden außer der Scherdeformation auch die Schubspannung und die Phasenverschiebung zwischen beiden Größen vom Messgerät aufgenommen. Aus den Messgrößen werden der Speichermodul G' (Realteil des komplexen Schubmoduls), der Verlustmodul G" (Imaginärteil des komplexen Schubmoduls) sowie der Verlustfaktor tan δ = G"/G' bestimmt. Der Speichermodul beschreibt das elastische Verhalten des Materials (Speicherung mechanischer Energie), während der Verlustmodul das viskose Verhalten des Materials beschreibt (Dissipation mechanischer Energie und Umwandlung in Wärme).

Die Messergebnisse sind in den Figuren 1 bis 7 dargestellt.

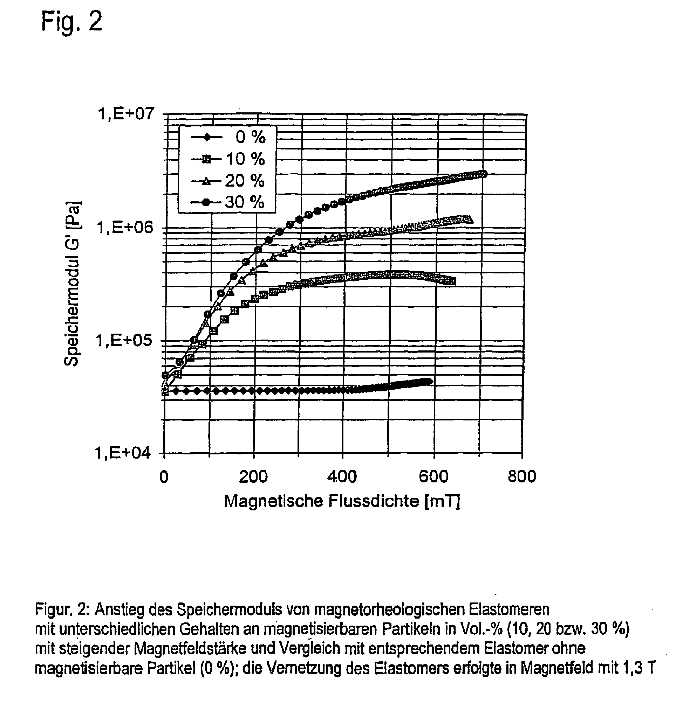

Die Messergebnisse zeigen, dass die mechanischen Eigenschaften der magnetorheologischen Elastomere in bisher nicht bekanntem Ausmaß durch die magnetische Feldstärke verändert werden können. Die mechanischen Eigenschaften hängen außerdem vom Volumenanteil der Eisenpartikel im Elastomer sowie von Größenverteilung, Form und Zusammensetzung der Partikel ab. Ein weiterer Einflussfaktor ist das Magnetfeld, das während der Vernetzung des Elastomers angelegt wird, Beim Ausführungsbeispiel 3 wird der Speichermodul durch ein während der Messung angelegtes Magnetfeld mit einer Flussdichte von 700 mT von einem Anfangswert von 30 kPa auf einen Wert von nahezu 3 MPa, d. h. um einen Faktor von nahezu 100, gesteigert(Figur 1). Für den Verlustmodul wird bei dieser Probe eine Steigerung von 30 kPa auf etwa 1 MPa erreicht (Figur 2).

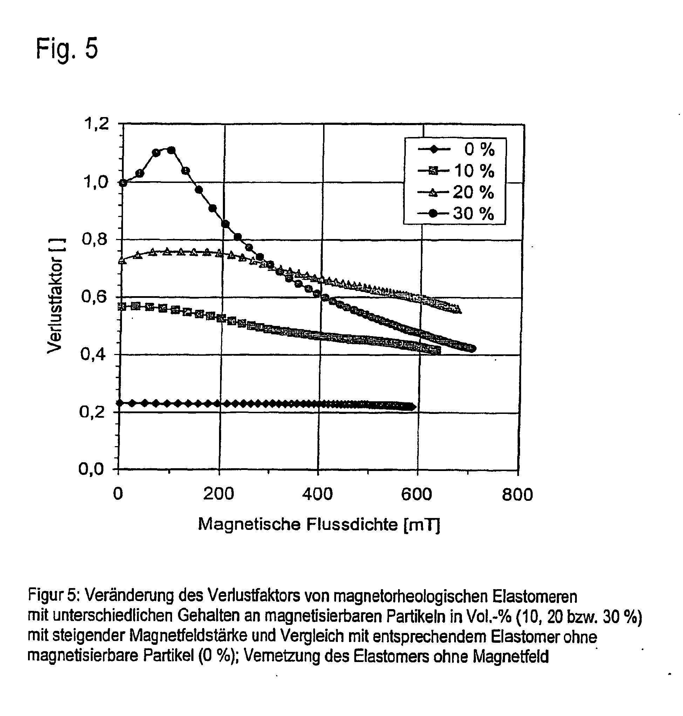

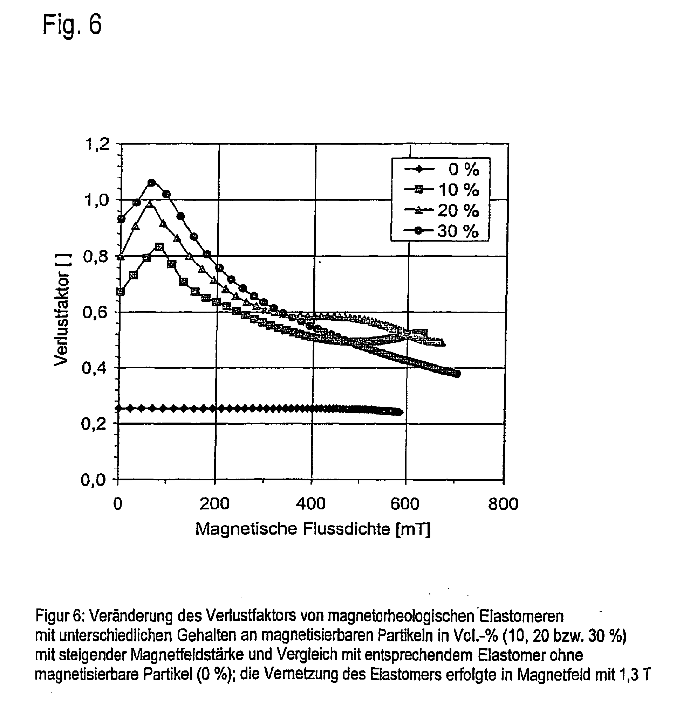

Die starke Veränderung des Verlustfaktors tan δ mit der angelegten magnetischen Feldstärke (Flussdichte) (Figuren 5 und 6) zeigt, dass der relative Anteil der dissipierten Energie durch das Magnetfeld gesteuert werden kann. Dies könnte für steuerbare Schwingungsdämpfer interessant sein.

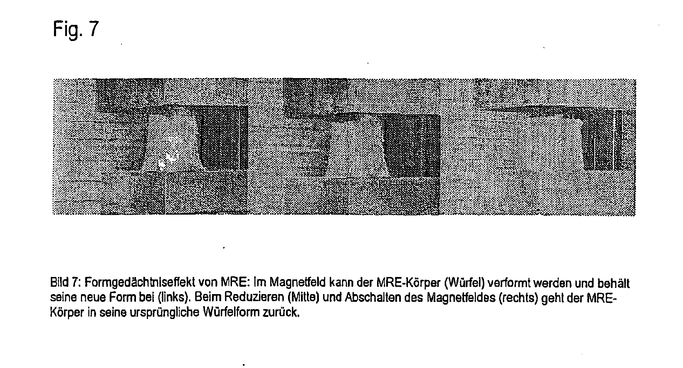

Eine weitere überraschende Eigenschaft der erfindungsgemäßen magnetorheologischen Elastomere ist ihr Formgedächtniseffekt. Nachdem ein Formkörper des magnetorheologischen Elastomers (z.B. ein Würfel) in einem hinreichend starken Magnetfeld versteift wurde, kann er durch Einwirken äußerer Kräfte verformt werden. Diese veränderte Form wird beibehalten, solange das Magnetfeld wirkt. Bei einer stufenweisen Reduzierung der Magnetfeldstärke geht der Formkörper schließlich wieder in seine Ausgangsform zurück. Dieser Formgedächtniseffekt lässt sich viele Male wiederholen (Figur 7).

## Patentansprüche

1. Magnetorheologische Elastomere aus mindestens einem nicht-magnetisierbaren elastomeren Tragermedium und darin enthaltenen magnetisierbaren Partikeln, **dadurch gekennzeichnet, dass** das mindestens eine elastomere Trägermedium ausgewählt ist aus gießfähigen Elastomermaterialien und einen Schubmodul < 250 kPa. gemessen bei 10 Hz und einer Deformation von 1 % und bei 25°C aufweist und dass die magnetisierbaren Partikel aus weichmagnetischen Materialien ausgewählt sind.

2. Magnetorheologische Elastomere nach Anspruch 1, **dadurch gekennzeichnet, dass** das elastomere Trägermedium aus Silikon oder Polyurethan ausgewählt sind.

3. Magnetorheologische Elastomere nach Anspruch 1 oder 2 **dadurch gekennzeichnet, dass** die magnetisierbaren Partikel aus weichmagnetischen metallischen Werkstoffen, wie Eisen, Kobalt, Nickel (auch in nicht-reiner Form) und Legierungen daraus, wie Eisen-Kobalt, Eisen-Nickel, magnetischer Stahl, Eisen-Silizium und/oder deren Mischungen ausgewählt sind.

4. Magnetorheologische Elastomere nach Anspruch 1 oder 2 **dadurch gekennzeichnet, dass** die magnetisierbaren Partikel aus weichmagnetischen oxidkeramischen Werkstoffen, wie kubischen Ferriten, Perowskiten und Granaten der allgemeinen Formel
MO. Fe₂O₃
mit einem oder mehreren Metallen aus der Gruppe M = Mn, Fe, Co, Ni, Cu, Zn, Ti, Cd oder Magnesium und/oder deren Mischungen ausgewählt sind.

5. Magnetorheologische Elastomere nach
Anspruche 1 oder 2 **dadurch gekennzeichnet, dass** die magnetisierbaren Partikel aus Mischferriten wie MnZn-, NiZn-, NiCo-, NiCuCo-, NiMg-, CuMg-Ferriten und/oder deren Mischungen ausgewählt sind.

6. Magnetorheologische Elastomere nach
Anspruche 1 oder 2 ,**dadurch gekennzeichnet, dass** die magnetisierbaren Partikel aus Eisencarbid, Eisennitrid, Legierungen von Vanadium, Wolfram, Kupfer und Mangan und/oder deren Mischungen ausgewählt sind.

7. Magnetorheologische Elastomere nach einem oder mehreren der vorhergehenden Ansprüche; **dadurch gekennzeichnet, dass** die mittlere Partikelgröße der magnetisierbaren Partikel zwischen 5 nm und 10 mm, bevorzugt zwischen 10 nm und 1 mm liegt.

8. Magnetorheologische Elastomere nach einem oder mehreren der vorhergehenden Ansprüche, **dadurch gekennzeichnet, dass** die magnetisierbaren Partikel eine bimodale Größenverteilung aufweisen.

9. Magnetorheologische Elastomere nach einem oder mehreren der vorhergehenden Ansprüche, **dadurch gekennzeichnet, dass** die magnetisierbaren Partikel eine anisotrope Verteilung in der Elastomermatrix aufweisen.

10. Magnetorheologische' Elastomere nach einem oder mehreren der vorhergehenden Ansprüche, **dadurch gekennzeichnet, dass** die magnetisierbaren Partikel eine isotrope Verteilung in der Elastomermatrix aufweisen.

11. Magnetorheologische Elastomere nach einem oder mehreren der vorhergehenden Ansprüche, **dadurch gekennzeichnet, dass** sie als Additive Dispergiermittel, Antioxidantien, Entschäumer, Weichmacher und/oder Antiverschleißmittel enthalten.

12. Magnetorheologische Materialien nach einem oder mehreren der vorhergehenden Ansprüche, **dadurch gekennzeichnet, dass**
- der Anteil der magnetisierbaren Partikel zwischen 5 und 70 Vol.-%, bevorzugt zwischen 10 und 60 Vol.-%, liegt.
- der Anteil des elastomeren Trägermediums zwischen 20 und 95 Vol.-%, bevorzugt zwischen 30 und 90 Vol.-% liegt.
- der Anteil der Additive bis zu 20 Masse-%, bevorzugt zwischen 0,01 und 15 (bezogen auf die magnetisierbaren Feststoffe) beträgt.

13. Verwendung der magnetorheologischen Elastomere nach einem der vorhergehenden Ansprüche 1 bis 12 als magnetisch steuerbare Elastomerkomposite zusammen mit einem Magnetkreis, der Elektromagnete und Permanentmagnete zur Einstellung des Arbeitspunktes der Steifigkeit enthält.

14. Verwendung der magnetorheologischen Elastomere nach einem der vorhergehenden Ansprüche als magnetisch steuerbare Elastomerkomposition für die Schwingungsdämpfung, Schwingungsisolation, Aktoren, Sicherheitsschalter, haptische Systeme und künstliche Muskeln

## Claims

1. Magnetorheological elastomers comprising at least one non-magnetisable elastomeric carrier medium and magnetisable particles contained therein, **characterised in that** the at least one elastomeric carrier medium is selected from castable elastomer materials and has a shear modulus of < 250 kPa measured at 10 Hz and at a deformation of 1% and at 25°C, and that the magnetisable particles are selected from soft magnetic materials.

2. Magnetorheological elastomers according to claim 1, **characterised in that** the elastomeric carrier medium is selected from silicone or polyurethane.

3. Magnetorheological elastomers according to claim 1 or 2, **characterised in that** the magnetisable particles are selected from soft magnetic metallic materials, such as iron, cobalt, nickel (also in non-pure form) and alloys thereof, such as iron-cobalt, iron-nickel, magnetic steel, iron-silicon and/or mixtures-thereof.

4. Magnetorheological elastomers according to claim 1 or 2, **characterised in that** the magnetisable particles are selected from soft magnetic oxide ceramic materials, such as cubic ferrites, perovskites and garnets of the general formula
MO. Fe₂O₃
with one or more metals from the group M = Mn, Fe, Co, Ni, Cu, Zn, Ti, Cd or magnesium and/or mixtures thereof.

5. Magnetorheological elastomers according to claims 1 or 2, **characterised in that** the magnetisable particles are selected from mixed ferrites such as MnZn, NiZn, NiCo, NiCuCo, NiMg or CuMg ferrites and/or mixtures thereof.

6. Magnetorheological elastomers according to claims 1 or 2, **characterised in that** the magnetisable particles are selected from iron carbide, iron nitride, alloys of vanadium, tungsten, copper and manganese and/or mixtures thereof.

7. Magnetorheological elastomers according to one or more of the preceding claims, **characterised in that** the average particle size of the magnetisable particles is between 5 nm and 10 mm, preferably between 10 nm and 1 mm.

8. Magnetorheological elastomers according to one or more of the preceding claims, **characterised in that** the magnetisable particles have a bimodal size distribution.

9. Magnetorheological elastomers according to one or more of the preceding claims, **characterised in that** the magnetisable particles have an anisotropic distribution in the elastomer matrix.

10. Magnetorheological elastomers according to one or more of the preceding claims, **characterised in that** the magnetisable particles have an isotropic distribution in the elastomer matrix.

11. Magnetorheological elastomers according to one or more of the preceding claims, **characterised in that** they contain dispersing agents, antioxidants, defoamers, plasticisers and/or anti-wear agents as additives.

12. Magnetorheological materials according to one or more of the preceding claims, **characterised in that**
- the proportion of the magnetisable particles is between 5 and 70 vol.%, preferably between 10 and 60 vol.%
- the proportion of the elastomeric carrier medium is between 20 and 95 vol.%, preferably between 30 and 90 vol.%
- the proportion of the additives is up to 20 wt.%, preferably between 0.01 and 15 (based on the magnetisable solids).

13. Use of the magnetorheological elastomers according to one of the preceding claims 1 to 12 as magnetically controllable elastomer composites together with a magnetic circuit which contains electromagnets and permanent magnets to adjust the operating point of the stiffness.

14. Use of the magnetorheological elastomers according to one of the preceding claims as a magnetically controllable elastomer composition for vibration damping, vibration insulation, actuators, safety switches, haptic systems and artificial muscles.

## Revendications

1. Elastomères magnétorhéologiques constitués d'au moins un support élastomère non magnétisable et de particules magnétisables qui y sont contenues, **caractérisés en ce que** le au moins un support élastomère est choisi parmi les matériaux élastomères coulables et présente un module de glissement < 250 kPa mesuré à 10 Hz et une déformation de 1 % et à 25°C et **en ce que** les particules magnétisables sont choisies parmi des matériaux magnétiques doux.

2. Elastomères magnétorhéologiques selon la revendication 1, **caractérisés en ce que** le support élastomère est choisi parmi la silicone ou le polyuréthane.

3. Elastomères magnétorhéologiques selon la revendication 1 ou 2, **caractérisés en ce que** les particules magnétisables sont choisies parmi des matériaux métalliques magnétiques doux, tels que le fer, le cobalt, le nickel (également sous forme non pure) et les alliages de ceux-ci, tels que le fer-cobalt, le fer-nickel, l'acier magnétique, le fer-silicium et/ou leurs mélanges.

4. Elastomères magnétorhéologiques selon la revendication 1 ou 2, **caractérisés en ce que** les particules magnétisables sont choisies parmi les matériaux céramiques oxydés magnétiques doux, tels que les ferrites cubiques, les perowskites et les grenats de formule générale :
MO. Fe₂O₃
avec un ou plusieurs métaux choisis dans le groupe M = Mn, Fe, Co, Ni, Cu, Zn, Ti, Cd ou le magnésium et/ou leurs mélanges.

5. Elastomères magnétorhéologiques selon la revendication 1 ou 2, **caractérisés en ce que** les particules magnétisables sont choisies parmi les ferrites mixtes, telles que les ferrites de MnZn, de NiZn, de NiCo, de NiCuCo, de NiMg, de CuMg et/ou leurs mélanges.

6. Elastomères magnétorhéologiques selon la revendication 1 ou 2, **caractérisés en ce que** les particules magnétisables sont choisies parmi le carbure de fer, le nitrure de fer, les alliages de vanadium, de tungstène, de cuivre et de manganèse et/ou leurs mélanges.

7. Elastomères magnétorhéologiques selon l'une quelconque ou plusieurs des revendications précédentes, **caractérisés en ce que** la taille particulaire moyenne des particules magnétisables se situe entre 5 nm et 10 mm, de préférence entre 10 nm et 1 mm.

8. Elastomères magnétorhéologiques selon l'une quelconque ou plusieurs des revendications précédentes, **caractérisés en ce que** les particules magnétisables présentent une distribution bimodale de tailles.

9. Elastomères magnétorhéologiques selon l'une quelconque ou plusieurs des revendications précédentes, **caractérisés en ce que** les particules magnétisables présentent une distribution anisotrope dans la matrice élastomère.

10. Elastomères magnétorhéologiques selon l'une quelconque ou plusieurs des revendications précédentes, **caractérisés en ce que** les particules magnétisables présentent une distribution isotrope dans la matrice élastomère.

11. Elastomères magnétorhéologiques selon l'une quelconque ou plusieurs des revendications précédentes, **caractérisés en ce qu'**ils contiennent, comme additifs, des agents dispersants, des antioxydants, des agents anti-moussants, des agents plastifiants et/ou des agents anti-usure.

12. Matériaux magnétorhéologiques selon l'une quelconque ou plusieurs des revendications précédentes, **caractérisés en ce que**
- la fraction des particules magnétisables se situe entre 5 et 70 % en volume, de préférence entre 10 et 60 % en volume,
- la fraction du support élastomère se situe entre 20 et 95 % en volume, de préférence entre 30 et 90 % en volume,
- la fraction des additifs a une valeur allant jusqu'à 20 % en masse, de préférence entre 0,01 et 15 % en masse (par rapport aux solides magnétisables).

13. Utilisation des élastomères magnétorhéologiques selon l'une quelconque des revendications précédentes 1 à 12 comme composites élastomères qui peuvent être commandés par voie magnétique, conjointement avec un circuit magnétique qui contient des électroaimants et des aimants permanents pour régler le point de fonctionnement de la rigidité.

14. Utilisation des élastomères magnétorhéologiques selon l'une quelconque des revendications précédentes comme composition élastomère qui peut être commandée par voie magnétique pour l'amortissement des vibrations, l'isolement des vibrations, des actionneurs, des interrupteurs de sécurité, des systèmes haptiques et des muscles artificiels.
